# EUROPEAN PATENT SPECIFICATION

(11) **EP 3 722 130 B1**
(45) Date of publication and mention of the grant of the patent: **11.08.2021**
(21) Application number: 20163358.3
(22) Date of filing: 16.03.2020
(51) Int. Cl.: B60K 6/48, B60K 6/365, B60W 10/115, B60W 10/06, B60W 10/08, B60W 10/02, B60W 20/50, B60W 30/184, B60W 50/029, B60W 30/182

(54) **HYBRID VEHICLE CONTROL DEVICE AND HYBRID VEHICLE CONTROL METHOD**
HYBRIDFAHRZEUGSTEUERUNGSVORRICHTUNG UND HYBRIDFAHRZEUGSTEUERUNGSVERFAHREN
DISPOSITIF DE COMMANDE DE VÉHICULE HYBRIDE ET PROCÉDÉ DE COMMANDE DE VÉHICULE HYBRIDE

(30) Priority: 28.03.2019 JP 2019063570
(43) Date of publication of application: 14.10.2020
(73) Proprietor: TOYOTA JIDOSHA KABUSHIKI KAISHA, Toyota-shi, Aichi-ken 471-8571 (JP)
(72) Inventor: EBUCHI, Hiroaki, Aichi-ken, 471-8571 (JP); IMAMURA, Tatsuya, Aichi-ken, 471-8571 (JP); ENDO, Takahito, Aichi-ken, 471-8571 (JP)
(74) Representative: J A Kemp LLP

(56) References cited:
- WO-A1-2013/145096
- DE-A1-102014 221 072
- US-A1- 2017 001 510

## Description

### BACKGROUND OF THE INVENTION

### 1. Field of the Invention

The invention relates to a control device for a hybrid vehicle that includes an engine and a motor as drive force sources and in which a plurality of travel modes with different engine rotational speeds or different drive modes can be set, and also relates to a method for controlling such a hybrid vehicle.

### 2. Description of Related Art

An example of the hybrid vehicle of this type is described in Japanese Unexamined Patent Application Publication No. 2017-7437 (JP 2017-7437 A). The hybrid vehicle described in JP 2017-7437 A is a so-called two motor-type hybrid vehicle including a power split device that splits a torque output from an engine into a torque for a first motor having a power generating function and a torque for an output side (driving wheels). In a hybrid travel mode (HV travel mode) in which the engine is driven, the engine rotational speed is controlled with the first motor, electric power generated by the first motor is supplied to a second motor, and a torque output from the second motor is added to the torque output from the power split device.

The power split device described in JP 2017-7437 A is configured so that various travel modes can be set with two sets of planetary gear mechanisms and a plurality of engagement mechanisms. The travel modes include a low (Lo) mode, a high (Hi) mode, a direct-coupling (fixed gear stage) mode, and a separation mode. In the Lo mode, a gear ratio is set so that a reaction torque of the first motor is small with respect to the torque output from the engine. In the Hi mode, a gear ratio is set so that the reaction torque of the first motor is large with respect to the torque output from the engine. In the direct-coupling mode, the power split device as a whole rotates integrally. In the separation mode, the engine is separated from the driving wheels so that the vehicle can travel using the motor with rotation of the engine stopped. The direct-coupling mode is set by engaging a so-called high (Hi) clutch that is engaged to set the Hi mode and a so-called low (Lo) clutch that is engaged to set the Lo mode. Thus, by setting the direct-coupling mode as a transitional state for switching the travel mode between the Hi mode and the Lo mode, the travel mode can be switched smoothly with a driving torque maintained. Further, in the direct-coupling mode, the whole amount of torque output from the engine can be transmitted to the driving wheels without being converted into electric power and vice versa, so that power transmission efficiency is improved.

WO 2013/145096 A1 discloses a drive control device of a hybrid vehicle with which a suitable limp-home is implemented when an engine breakdown occurs. The hybrid vehicle drive control device comprises: a clutch which connects/disconnects carrier of a first planet gear device with a carrier of a second planet gear device; and a brake which connects/disconnects the carrier with a housing. When the engine breaks down, an input axle which corresponds to an output axle of the engine is set not to rotate, and thus, when employing drive power of a first electric motor and/or a second electric motor to carry out a limp-home when the engine breaks down, it is possible to suitably alleviate the occurrence of resonance and degraded robustness.

### SUMMARY OF THE INVENTION

As described in JP 2017-7437 A, in the hybrid vehicle that can set the plurality of travel modes, the engine rotational speed is controlled with the motor, so that an engine operation point can be set to an operation point that realizes a good fuel efficiency. Further, the travel mode can be set to the Hi mode or the Lo mode in accordance with a vehicle speed and a required drive force. Thus, it is possible to achieve traveling with good energy efficiency (fuel efficiency) while satisfying a drive request by a driver. On the other hand, when the engine rotational speed decreases due to some abnormalities during traveling with the engine being driven, a rotational speed of a rotating member that constitutes a transmission mechanism, such as the power split device, or a rotational speed of a motor connected to the transmission mechanism, etc. may excessively increase, resulting in deterioration of durability thereof.

The invention is defined in claim 1. Further aspects and preferred embodiments are defined in the dependent claims. Any aspects, embodiments and examples mentioned here after which do not fall under the scope of the appended claims do not form part of the invention and are merely provided for illustrative purposes. The invention provides a control device for a hybrid vehicle, which can suppress an excessive increase in rotational speed or an increase in vibration due to some abnormalities that decrease the rotational speed of the engine, and a method of controlling the hybrid vehicle.

A first aspect of the invention relates to a control device for a hybrid vehicle

The travel modes are travel modes with different relationships between a rotational speed of the engine and a rotational speed of the driving wheel, and may be travel modes in which torque distributed to the driving wheel with respect to torque output from the engine are different.

In the control device, the transmission mechanism may include a plurality of rotating members including the first rotating element, the second rotating element, and the third rotating element. The predetermined condition that does not allow the rotation of the engine to stop may be that a rotational speed of at least one rotating member, out of the rotating members, exceeds a predetermined allowable rotational speed when the engine stops. The travel mode in which the predetermined condition is not satisfied may be a travel mode in which even when the engine stops, the rotational speed of none of the rotating members exceeds the predetermined allowable rotational speed.

In the control device, the predetermined condition that does not allow the rotation of the engine to stop may be that the direct-coupling mode is set.

In the control device, the travel mode in which the predetermined condition is not satisfied may be the separation mode.

In the control device, the transmission mechanism may include a shift unit that switches the travel mode. The shift unit may include a direct-coupling position for setting the direct-coupling mode, a first shift position for setting the first shift mode, a second shift position for setting the second shift mode, and a separation position for setting the separation mode, and the shift unit may be configured such that the first shift position and the second shift position are interposed between the direct-coupling position and the separation position, and the travel mode is switched between the direct-coupling position and the separation position by way of either the first shift position or the second shift position. The controller may be configured to control, when the travel mode is switched from the direct-coupling mode to the separation mode in response to detection of the abnormality, switching of the shift unit such that the travel mode is switched by way of a shift position, out of the first shift position and the second shift position, in which the predetermined condition is not satisfied.

In the control device, the predetermined condition that does not allow the rotation of the engine to stop may represent a state in which switching from a travel mode, out of the travel modes, other than the direct-coupling mode to another travel mode is being performed. The travel mode in which the predetermined condition is not satisfied may be a travel mode, out of the travel modes, other than the direct-coupling mode.

In the control device, the transmission mechanism may include a plurality of rotating members including the first rotating element, the second rotating element, and the third rotating element. The predetermined condition that does not allow the rotation of the engine to stop may represent that a rotational speed of at least one rotating member, out of the rotating members, exceeds a predetermined allowable rotational speed when the engine stops. The travel mode in which the predetermined condition is not satisfied may be a travel mode in which the rotational speed of none of the rotating members exceeds the predetermined allowable rotational speed even when the engine stops.

In the control device, the transmission mechanism may include a shift unit that switches the travel mode. The shift unit may include a direct-coupling position for setting the direct-coupling mode, a first shift position for setting the first shift mode, a second shift position for setting the second shift mode, and a separation position for setting the separation mode, and the shift unit may be configured such that the first shift position and the second shift position are interposed between the direct-coupling position and the separation position, and the travel mode is switched between the direct-coupling position and the separation position by way of either the first shift position or the second shift position. The controller may be configured to control, when the travel mode is switched from the direct-coupling mode to the separation mode in response to detection of the abnormality, switching of the shift unit such that the travel mode is switched by way of a shift position, out of the first shift position and the second shift position, in which the predetermined condition is not satisfied.

A second aspect of the invention relates to a method for controlling a hybrid vehicle.

In the above configurations, when the abnormality that causes the engine to stop is detected while the hybrid vehicle is traveling with the engine and the driving wheel connected such that torque can be transmitted, it is determined whether the predetermined condition that does not allow the rotation of the engine to stop is determined. When it is determined that the predetermined condition that does not allow the rotation of the engine to stop, the control to set the travel mode set by the transmission mechanism to a travel mode that allows the rotation of the engine to stop, and the engine is stopped in this state. The condition that does not allow the rotation of the engine to stop is, for example, an excessive increase in the rotational speed of any of the rotating members. Thus, a condition that allows the engine to stop is satisfied at the time of stopping the engine. Therefore, it is possible to suppress a situation where the rotational speed of the rotating member excessively increases and durability is accordingly deteriorates.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic diagram showing an example of a drive device of a hybrid vehicle;
FIG. 2 is a block diagram for illustrating a structure of an electronic control unit (ECU);
FIG. 3 is a table collectively showing each travel mode and engagement and disengagement of each engagement mechanism;
FIG. 4A is a collinear diagram for illustrating an operation state of a high mode;
FIG. 4B is a collinear diagram for illustrating an operation state of a direct-coupling mode;
FIG. 4C is a collinear diagram for illustrating an operation state of a low mode;
FIG. 4D is a collinear diagram for illustrating an operation state of a separation mode;
FIG. 5 is a mechanism explanation diagram for illustrating an example of a shift mechanism (shift unit);
FIG. 6 is an explanatory diagram for illustrating that mode transition between the direct-coupling mode and the separation mode is sequentially performed;
FIG. 7 is a flowchart for illustrating an example of control performed by a control device according to an embodiment;
FIG. 8 is a flowchart for illustrating a control example, in which the mode transition is more specifically described;
FIG. 9 is a flowchart for illustrating another example of the control performed by the control device according to the embodiment; and
FIG. 10 is a flowchart for illustrating yet another example of the control performed by the control device according to the embodiment.

### DETAILED DESCRIPTION OF EMBODIMENT

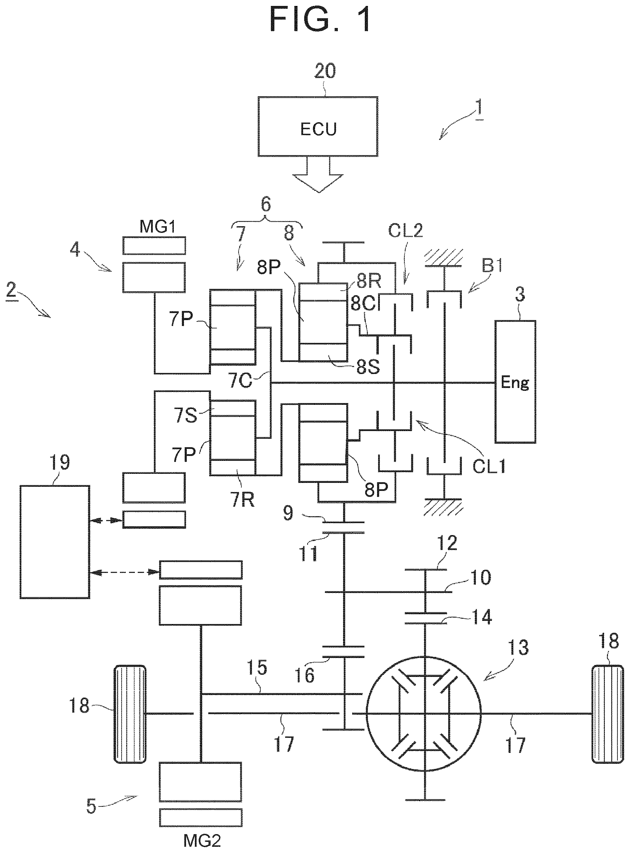

A control device according to an embodiment of the invention controls a hybrid vehicle including an engine and a motor as drive force sources, and an example thereof is schematically shown in FIG. 1. FIG. 1 shows a driving apparatus 2 in a hybrid vehicle 1, and the driving apparatus 2 includes an engine (Eng) 3 and two motors 4, 5 as drive force sources. The engine 3 is an internal combustion engine such as a gasoline engine or a diesel engine, and is configured such that operation states such as a throttle opening, a fuel injection amount, and an ignition timing can be electrically controlled. A first motor (MG1) 4 is a motor mainly for controlling a rotational speed of the engine 3, and is composed of a motor having a power generating function, that is, a motor-generator. The first motor 4 is an example of a "motor" in the embodiment. A second motor (MG2) 5 is a motor that is mainly supplied with electric power generated by the first motor 4 to output a drive force for traveling. The second motor 5 performs energy regeneration during deceleration, and thus, is composed of a motor-generator, similar to the first motor 4.

A power split device 6 is provided that is a mechanism for controlling the rotational speed of the engine 3 with the first motor 4 and converting part of the power output from the engine 3 into electric power. The power split device 6 is an example of a transmission mechanism in the embodiment. The power split device 6 shown in FIG. 1 is composed of a composite planetary gear mechanism in which two sets of planetary gear mechanisms 7, 8 are combined, and a plurality of (at least three) rotating elements including an input element, an output element, and a reaction force element.

Specifically, in the example shown in FIG. 1, each planetary gear mechanism 7, 8 is a single-pinion planetary gear mechanism. One of the planetary gear mechanisms (hereinafter referred to as a first planetary gear mechanism) 7 includes a sun gear 7S, a ring gear 7R that is an internal gear disposed concentrically with the sun gear 7S, and a carrier 7C supporting pinion gears 7P disposed between the sun gear 7S and the ring gear 7R and meshing with the sun gear 7S and the ring gear 7R. The first planetary gear mechanism 7 is configured to perform a differential action with the sun gear 7S, the ring gear 7R, and the carrier 7C. Similarly, the other planetary gear mechanism (hereinafter referred to as a second planetary gear mechanism) 8 includes a sun gear 8S, a ring gear 8R that is an internal gear disposed concentrically with the sun gear 8S, and a carrier 8C supporting pinion gears 8P disposed between the sun gear 8S and the ring gear 8R and meshing with the sun gear 8S and the ring gear 8R. The second planetary gear mechanism 8 is configured to perform a differential action with the sun gear 8S, the ring gear 8R and the carrier 8C.

The engine 3 is connected to the carrier 7C of the first planetary gear mechanism 7, and thus, the carrier 7C serves as the input element (an example of a first rotating element in the embodiment). Further, the first motor 4 is connected to the sun gear 7S of the first planetary gear mechanism 7, and thus, the sun gear 7S serves as the reaction force element (an example of a second rotating element in the embodiment). The planetary gear mechanisms 7, 8 are arranged so as to be coaxial with the engine 3, and the ring gear 7R of the first planetary gear mechanism 7 and the sun gear 8S of the second planetary gear mechanism 8 are connected so as to rotate together. The ring gear 8R of the second planetary gear mechanism 8 is provided with an output gear 9, and thus, the ring gear 8R serves as the output element (an example of a third rotating element in the embodiment).

The first planetary gear mechanism 7 and the second planetary gear mechanism 8 constitute a composite planetary gear mechanism with their predetermined rotating elements are connected to each other. As engagement mechanisms for changing a connection relationship, a first clutch CL1 (an example of a first engagement mechanism) and a second clutch CL2 (an example of a second engagement mechanism) are provided. The first clutch CL1 selectively connects the carriers 7C and 8C. The second clutch CL2 selectively connects predetermined two rotating elements of the second planetary gear mechanism 8 (the ring gear 8R and the carrier 8C in the example shown in FIG. 1). Thus, the second clutch CL2 is a clutch that integrates the second planetary gear mechanism 8 as a whole.

Each of the clutches CL1, CL2 is composed of a meshing clutch (dog clutch). With this configuration, the configuration of the transmission mechanism or the driving apparatus 2 as a whole is reduced in size. Further, a brake B1 that selectively stops rotation of an output shaft of the engine 3 is provided. The brake B1 is a brake that stops reverse rotation of the engine 3 and thus, can be constituted by a one-way clutch. In the embodiment, the brake B1 need not be provided.

A counter shaft 10 is disposed in parallel with a rotation center axis of the engine 3 and the power split device 6. A driven gear 11 meshing with the output gear 9 and a drive gear 12 having a smaller diameter than the driven gear 11 are attached to the counter shaft 10. The drive gear 12 meshes with a ring gear 14 in a differential gear unit 13 that is a final reduction gear.

Further, the driven gear 11 is engaged with a drive gear 16 attached to a rotor shaft 15 of the second motor 5. Therefore, a torque output from the second motor 5 is added to a torque output from the output gear 9. The combined torque is transmitted from the differential gear unit 13 to driving wheels 18 via right and left drive shafts 17.

The first motor 4 and the second motor 5 are connected to a power supply device 19 that includes an inverter, a converter, a battery, and the like. This enables hybrid traveling in which the second motor 5 is driven by electric power generated by the first motor 4, electric traveling (EV traveling) in which both the motors 4, 5 are driven by electric power of the battery, and engine startup in which the engine 3 is cranked with the first motor 4.

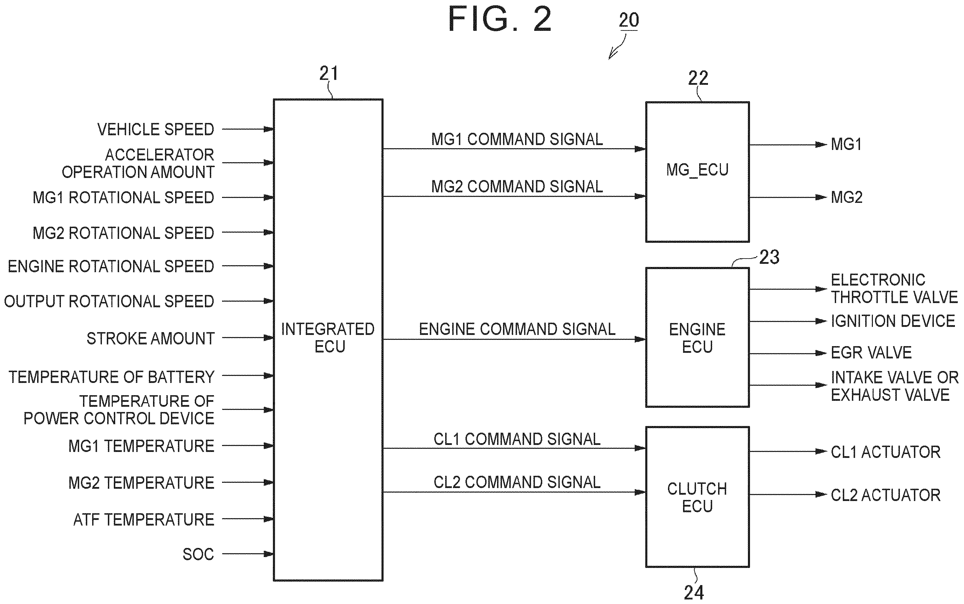

An electronic control unit (ECU) 20 is provided for controlling the engine 3, the power supply device 19, the clutches CL1, CL2, and the brake B1. The ECU 20 is composed mainly of a microcomputer, and is configured to perform calculations using input data, data stored in advance, and the like and output results of the calculations as control command signals. The ECU 20 is an example of a controller in the embodiment. The ECU 20 may be configured to collectively control the engine 3, the power supply device 19, and the like, or may be an electronic control device provided for each of the engine 3, the power supply device 19, or each engagement mechanism. Further, the ECU 20 may be a control device integrating these individual electronic control devices. An example of the ECU 20 is shown by a block diagram in FIG. 2.

In the example shown in FIG. 2, the ECU 20 is composed of an integrated ECU 21, an MG_ECU 22 for controlling the motors 4, 5, an engine ECU 23, and a clutch ECU 24 for controlling the clutches CL1, CL2. Examples of data input to the integrated ECU 21 from various sensors (not shown) mounted on the vehicle include a vehicle speed, an accelerator operation amount that is a depression angle (depression amount) of an accelerator pedal (not shown), a rotational speed of the first motor (MG1) 4, a rotational speed of the second motor (MG2) 5, an engine rotational speed, an output rotational speed, a stroke amount of each clutch CL1, CL2 in an engagement direction, a temperature of the battery, a temperature of the power supply device including an inverter and a converter, a temperature of the first motor 4, a temperature of the second motor 5, a temperature of lubricating oil (ATF), a state of charge (SOC) of the battery, and so forth.

Examples of the command signal output from the integrated ECU 21 include a command signal for the first motor 4 and a command signal for the second motor 5, which are input to the MG ECU 22, an engine command signal input to the engine ECU 23, and a CL1 command signal and a CL2 command signal for instructing engagement and disengagement of the clutches CL1, CL2, which are input to the clutch ECU 24. The MG_ECU 22 performs control to cause the motors (MG1, MG2) 4, 5 to function as motors or generators based on the input command signals, and to instruct torques and rotation directions of the motors 4, 5. The engine ECU 23 controls an opening degree of an electronic throttle valve (not shown) and an ignition timing, an opening degree of an EGR valve that controls an exhaust gas circulation rate, and a valve timing of an intake valve or an exhaust valve (not shown). The clutch ECU 24 controls an actuator of the first clutch CL1 and an actuator of the second clutch CL2 based on the input command signals.

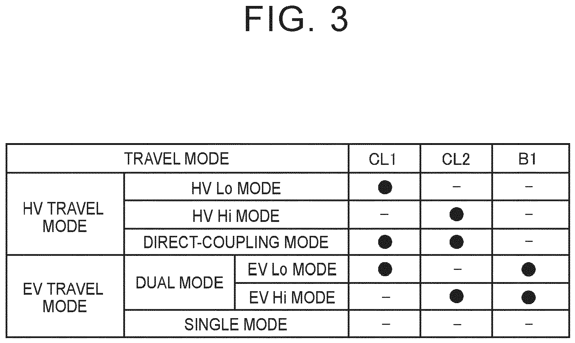

In the power split device 6 described above, a torque transmission path changes in accordance with engagement or disengagement of the clutches CL1, CL2, and the brake B1, and a drive torque corresponding to the torque transmission path can be obtained. In addition, the power split device 6 can set the engine rotational speed. The travel modes that are set in accordance with engagement or disengagement of the clutches CL1, CL2, and the brake B1 are collectively shown in FIG. 3. In FIG. 3, a mark "●" indicates engagement, and a mark "-" indicates disengagement. The HV (hybrid) travel mode shown in FIG. 3 is a mode in which the engine 3 is driven for traveling, and the EV (electric) travel mode is a mode in which electric power of the power supply device 19 is used for traveling.

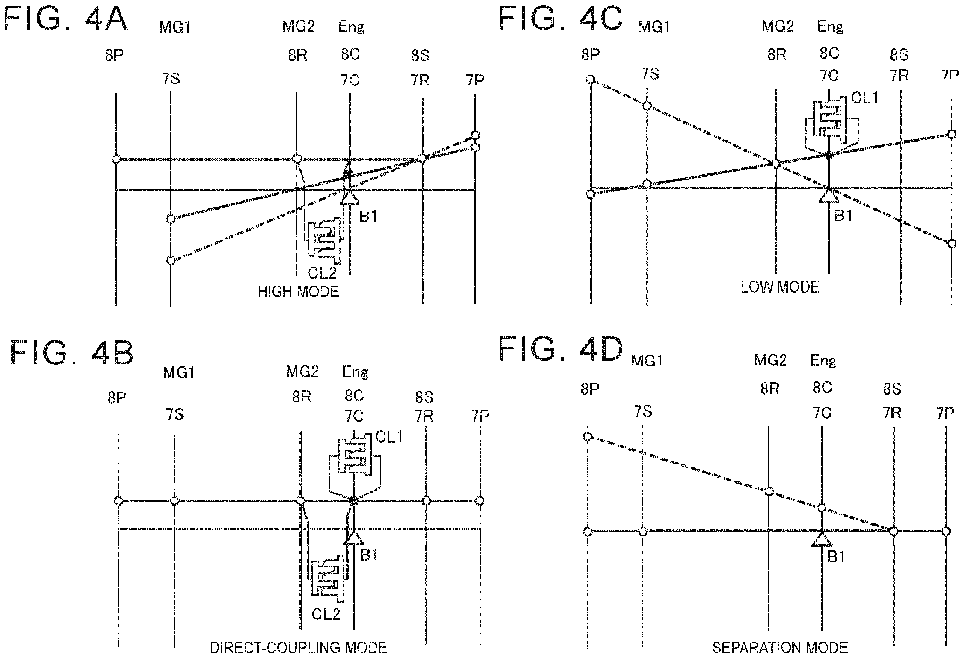

The travel modes set in accordance with engagement or disengagement of the clutches CL1, CL2 that can be actively controlled are the following four modes, that is, a high mode that is a shift mode set by engaging only the second clutch CL2, a low mode that is another shift mode set by engaging only the first clutch CL1, a direct-coupling (fixed gear stage) mode set by engaging both the first and second clutches CL1, CL2, and a separation (single) mode set by disengaging both the first and second clutches CL1, CL2. Operation states in the four travel modes are shown by collinear diagrams in FIGS. 4A to 4D. FIG. 4A shows the high mode, FIG. 4B shows the direct-coupling mode, FIG. 4C shows the low mode, and FIG. 4D shows the separation mode. In FIGS. 4A to 4D, each solid line indicates an operation state in the HV travel mode in which the engine 3 is driven while the engine 3 and the driving wheels 18 are connected so that torque can be transmitted, and each broken line indicates an operation state in the EV travel mode in which the hybrid vehicle 1 travels with the motor 4 or 5 while the engine 3 is stopped.

Each of the high mode in the HV travel mode (HV Hi mode) and the low mode in the HV travel mode (HV Lo mode) is a travel mode in which the power split device 6, together with the first motor 4, functions as an electrically-driven continuously variable speed change mechanism, and the engine rotational speed is controlled with the first motor 4. A difference between the terms high (Hi) and low (Lo) is a difference in magnitude of a reaction torque generated by the first motor 4. In the high mode, the reaction torque of the first motor 4 is large with respect to the torque output from the engine 3. In the low mode, the reaction torque of the first motor 4 is small with respect to the torque output from the engine 3. The rotational speed of the first motor 4 becomes higher or lower than the engine rotational speed depending on the vehicle speed, a required drive force, and the like, in order to set the engine rotational speed to a rotational speed with good fuel efficiency or to a rotational speed satisfying a drive request. Accordingly, a line indicating an operation state of the first planetary gear mechanism 7 in the high mode shown in the collinear diagram is inclined with respect to a base line indicating the rotational speed "0" in the collinear diagram, and a line indicating an operation state of the second planetary gear mechanism 8 is parallel to the base line. That is, a rotational speed of the ring gear 7R of the first planetary gear mechanism 7 and an output rotational speed (a rotational speed of the output gear 9) are always the same. Although a rotational speed of the pinion gears 8P of the second planetary gear mechanism 8 is the same as the output rotational speed, a rotational speed of the pinion gears 7P of the first planetary gear mechanism 7 is higher than the rotational speed of the ring gear 7R (or the output gear 9).

On the other hand, the operation states of the planetary gear mechanisms 7, 8 in the low mode are each represented by a single straight line that is an inclined line extending upward and rightward or extending upward and leftward with respect to the base line. Thus, the rotational speed (absolute rotational speed) of the pinion gears 7P of the first planetary gear mechanism 7 is higher than the rotational speed (absolute rotational speed) of the ring gear 7R of the first planetary gear mechanism 7 and the sun gear 8S of the second planetary gear mechanism 8. Further, the rotational speed (absolute rotational speed) of the pinion gears 8P of the second planetary gear mechanism 8 is higher than the rotational speed (absolute rotational speed) of the sun gear 7S of the first planetary gear mechanism 7. That is, the output rotational speed and the rotational speed of the ring gear 7R of the first planetary gear mechanism 7 can be different. Note that in either the high mode or the low mode, the gear ratio corresponding to the rotational speed ratio between the carrier 7C and the ring gear 8R is larger or smaller than "1".

In the direct-coupling mode, in contrast to the high mode and the low mode, both the two clutches CL1, CL2 are engaged and the power split device 6 is integrated as a whole. Therefore, the rotational speed of the engine 3 (the carrier 7C of the first planetary gear mechanism 7) is the same as the rotational speed of the output gear 9 (the ring gear 8R of the second planetary gear mechanism 8). Also, the rotational speeds of the pinion gears 7P, 8P are the same as those of the other rotating elements. That is, the gear ratio corresponding to the rotational speed ratio between the carrier 7C and the ring gear 8R is "1". Alternatively, the rotational speed of the engine 3 and the rotational speed of the driving wheels 18 have a one-to-one relationship.

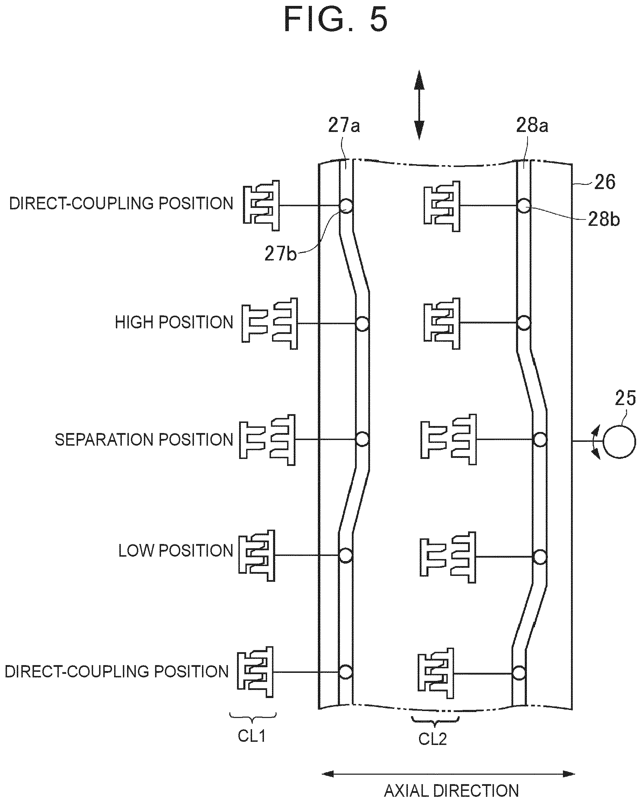

In the embodiment described here, the travel mode is switched among the above travel modes in a predetermined order. Specifically, the travel mode is switched between the direct-coupling mode and the separation mode by way of either the high mode or the low mode. This is, for example, based on a configuration of a shift mechanism (shift unit), and in the example, the actuator that causes each of the clutches CL1, CL2 to be switched is composed of a cam mechanism that is driven by a single motor. FIG. 5 is a diagram for illustrating the example, in which a cylinder 26 rotated by the motor 25 is developed in a plane. An outer peripheral surface of the cylinder 26 is provided with two cam grooves 27a, 28a along a circumferential direction, and cam followers 27b, 28b are engaged with the cam grooves 27a, 28a, respectively. The cam groove 27a and the cam follower 27b correspond to, for example, the first clutch CL1, and the cam follower 27b is connected to the first clutch CL1.

As described above, the first clutch CL1 is a dog clutch. With forward and backward movement of movable teeth of the first clutch CL1 with respect to fixed teeth, the movable teeth and the fixed teeth mesh with each other so that the first clutch CL1 is engaged, and the movable teeth are separated from the fixed teeth so that the first clutch CL1 is disengaged. The cam follower 27b is connected to the movable teeth. Similarly, the other cam groove 28a and the cam follower 28b correspond to, for example, the second clutch CL2, and the cam follower 28b is connected to the second clutch CL2. As described above, the second clutch CL2 is a dog clutch. With forward and backward movement of the movable teeth with respect to the fixed teeth, the movable teeth and the fixed teeth mesh with each other so that the second clutch CL2 is engaged, and the movable teeth are separated from the fixed teeth so that the second clutch CL2 is disengaged. The cam follower 28b is connected to the movable teeth.

Each of the cam grooves 27a, 28a are formed on the outer peripheral surface of the cylinder 26 so as to meander in an axial direction of the cylinder 26, in order to enable the cam followers 27b, 28b to move back and forth in the axial direction of the cylinder 26. Specifically, the cam groove 27a meanders such that its position changes between the right and the left in FIG. 5 every 180 degrees, while the cam groove 28a also meanders such that its position changes between the right and the left in FIG. 5 every 180 degrees, although shifted in phase from the cam groove 27a by 90 degrees. A location (a position of a rotational angle of the cylinder 26) at which both the cam grooves 27a, 28a are offset to the left in FIG. 5 is a direct-coupling position for setting the direct-coupling mode. One of two positions shifted in phase from the direct-coupling position by 90 degrees is a predetermined shift position (high position) for setting the high mode. In this position, the cam groove 27a is offset to the right in FIG. 5, and the cam groove 28a is offset to the left in FIG. 5. Thus, the first clutch CL1 is disengaged and the second clutch CL2 is engaged so that the high mode is set.

The other position shifted in phase from the direct-coupling position by 90 degrees in the other direction is another shift position (low position) for setting the low mode. In this position, the cam groove 27a is offset to the left in FIG. 5 and the cam groove 28a is offset to the right in FIG. 5. Therefore, the first clutch CL1 is engaged and the second clutch CL2 is disengaged so that the low mode is set. A position that is shifted in phase by 180 degrees from the direct-coupling position for setting the direct-coupling mode is a separation position for setting the separation mode (single mode). In this position, both the cam grooves 27a, 28a are offset to the right in FIG. 5. Accordingly, both the clutches CL1, CL2 are disengaged so that the separation mode is set.

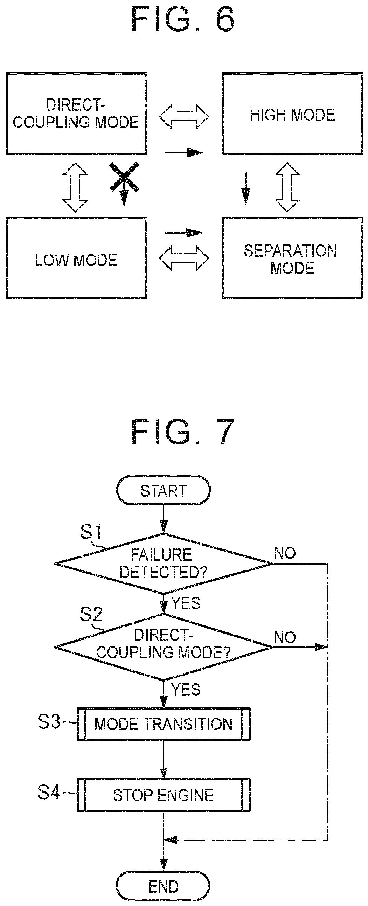

Therefore, in the shift mechanism configured as shown in FIG. 5, the shift position for setting the high mode or the shift position for setting the low mode is interposed between the direct-coupling position and the separation position. The travel mode is switched between the high mode and the low mode by way of either the high mode or the low mode. That is, sequential shifting is performed. In other words, when the travel mode is switched between the direct-coupling mode and the separation mode, a switching path can be selected. This situation is schematically shown in FIG. 6. In FIG. 6, thick double-headed arrows extending in a right-left direction and thick double-headed arrows extending in an up-down direction indicate directions of mode transition that is performed in a normal condition with no abnormality. In FIG. 6, thin one-headed arrows indicate directions of mode transition that is performed in an abnormal condition that causes the engine 3 to stop. In particular, the arrow with a cross indicates a mode transition that is not performed (that is prohibited). As shown in FIG. 6, the direct-coupling mode and the separation mode are positioned on a so-called diagonal line. When the travel mode is switched from one of the direct-coupling mode and the separation mode to the other, the switching path needs to follow a rectangle in FIG. 6 clockwise or counterclockwise. Thus, although temporarily, control for setting the low mode or the high mode is performed.

In the above-described direct-coupling mode, the vehicle speed and the engine rotational speed have the one-to-one relationship, so the vehicle speed decreases as the engine rotational speed decreases. Thus, if the rotation of the engine 3 is stopped for some reason while the hybrid vehicle 1 is traveling with the engine 3 being driven, it is necessary to cancel the direct-coupling mode and shift the travel mode to another travel mode. In that case, the travel modes to be set by switching can be selected. Therefore, the control device in the embodiment of the invention performs control for switching the travel mode as follows.

FIG. 7 is a flowchart for illustrating an example of the control, and the control is performed by the ECU 20 described above. The control shown in FIG. 7 is performed while the hybrid vehicle 1 is traveling with the engine 3 and the driving wheels 18 connected so that torque can be transmitted, that is, while the hybrid vehicle 1 is traveling in the HV travel mode. First, it is determined whether a failure has been detected (step S1). Here, the failure means a situation in which the engine 3 is stopped or a request to stop the engine 3. Since it is normal to continue the operation of the engine 3, detection of the failure means, in short, detection of an abnormal state or an emergency state.

When a negative determination is made in step S1, the engine 3 is not stopped, so the routine in FIG. 7 is terminated without performing any particular control. In contrast, when a positive determination is made in step S1, it is determined whether the direct-coupling mode described above is set (step S2). The direct-coupling mode is a travel mode in which the engine 3 and the driving wheels 18 are connected so that torque can be transmitted with their rotational speeds having a one-to-one relationship. Thus, when the engine 3 stops, the hybrid vehicle 1 also stops. That is, while the hybrid vehicle 1 is traveling using the engine 3 with the travel mode set to the direct-coupling mode, it is not allowed to stop the engine 3. Thus, in step S2, it is determined whether a condition that does not allow the rotation of the engine 3 to stop is satisfied. When a negative determination is made in step S2, it is considered that such a condition is not satisfied. In that case, the routine in FIG. 7 is terminated without performing any particular control.

In contrast, when a positive determination is made in step S2, it is considered that the condition that does not allow the rotation of the engine 3 to stop is satisfied, so the mode transition to the travel mode in which such a condition is not satisfied is performed (step S3). As described with reference to the collinear diagrams of FIGS. 4A to 4D, in the travel mode other than the direct-coupling mode, even if the rotation of the engine 3 (the carrier 7C of the first planetary gear mechanism 7) stops, the output gear 9 (ring gear 8R of the second planetary gear mechanism 8) is rotated so that traveling can be continued. In step S3, control for switching the travel mode to the travel mode other than the direct-coupling mode is started so that the traveling can be continued even when the engine 3 is stopped. Thereafter, the engine 3 is stopped and the routine in FIG. 7 is ended. Thus, the control in step S3 is an example of mode setting control in the embodiment.

The control for stopping the engine 3 includes stopping fuel supply, stopping ignition, etc. In the hybrid vehicle 1 having a powertrain shown in FIG. 1, the rotational speed of the engine 3 can be controlled with the first motor 4. Thus, when the above-described abnormality occurs, it is possible not to stop the engine 3 immediately, but to maintain the rotation of the engine 3 for a short period of time with, for example, the first motor 4 and then to stop the rotation of the engine 3. Therefore, in the control shown in FIG. 7, at the time of starting the mode transition control for switching the travel mode, the engine 3 is left rotating, and after the control is started, the engine 3 is stopped. With such a control, at the time when the engine 3 is stopped, the travel mode has been switched or is being switched to the travel mode other than the direct-coupling mode. In this state, at least the direct-coupling mode is cancelled, and the hybrid vehicle 1 can travel even if the engine 3 is stopped. Therefore, it is possible to suppress a situation where the rotational speed of the rotating member in the powertrain such as the power split device 6 is excessively decreased by the engine 3 and a situation where vibration increases accordingly. In other words, the mode transition may be started before such a situation occurs.

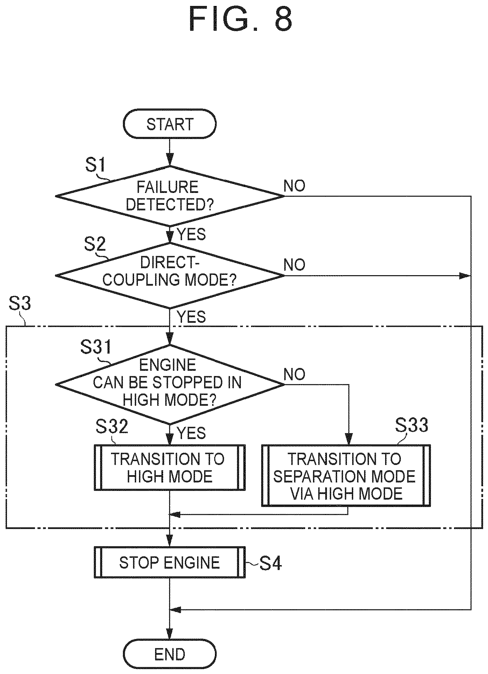

In the hybrid vehicle 1 having the powertrain shown in FIG. 1, there are the plurality of modes to which the travel mode can be transitioned from the direct-coupling mode. Depending on the travel mode that is actually set, among the plurality of travel modes, the rotational speeds of the rotating members such as the power split device 6, the motor 4, etc., may vary. Also, when the travel mode is transitioned from the direct-coupling mode to the separation mode, the switching by way of the low mode and the switching by way of the high mode can be selected. Thus, the mode transition control in step S3 described above may be performed so that the rotational speed of the predetermined rotating member does not increase excessively, and specifically, the control may be performed as shown in FIG. 8.

FIG. 8 is a flowchart for illustrating a control example in which the control in step S3 of FIG. 7 is more concretely shown. Thus, the same steps as those in the flowchart shown in FIG. 7 are assigned with the same reference symbols as in FIG. 7, and description thereof will be omitted. When a positive determination is made in step S2 based on the fact that the travel mode at the time when the failure is detected is the direct-coupling mode, it is determined whether the engine 3 can be stopped in the high mode (step S31). The reason for making the determination in step S31 is as follows.

The collinear diagrams regarding the composite planetary gear mechanism constituting the power split device 6 are as shown in FIGS. 4A to 4D described above. When the pinion gears 7P of the first planetary gear mechanism 7 and the pinion gears 8P of the second planetary gear mechanism 8 are added in each of FIGS. 4A to 4D, the pinion gears 7P of the first planetary gear mechanism 7 are represented by a line located further rightward in each of FIGS. 4A to 4D than the line indicating the ring gear 7R of the first planetary gear mechanism 7 and the sun gear 8S of the second planetary gear mechanism 8 (on the opposite side of the line indicating the ring gear 7R and the sun gear 8S from the line indicating the carriers 7C, 8C). Further, the pinion gears 8P of the second planetary gear mechanism 8 is represented by a line located further leftward in each of FIGS. 4A to 4D than the line indicating the sun gear 7S of the first planetary gear mechanism 7 (on the opposite side of the line indicating the sun gear 7S from the line indicating the ring gear 8R of the second planetary gear mechanism 8).

Thus, when the rotation of the engine 3 is stopped while the hybrid vehicle 1 is traveling at a predetermined vehicle speed, the rotational speeds of the pinion gears 7P, 8P increase, but the amount of increase is larger in the low mode than in the high mode. This means that an over-rotation is less likely to occur in the high mode than in the low mode, in other words, it is more likely that the engine 3 is allowed to stop in the high mode than in the low mode. Therefore, it is first determined whether the engine 3 can be stopped in the high mode. Thus, step S31 is an example of determining whether the condition that does not allow the rotation of the engine 3 to stop is satisfied in the embodiment.

When a positive determination is made in step S31, transition control to the high mode is started (step S32). Specifically, control for disengaging the first clutch CL1 out of the two clutches CL1, CL2 that are engaged in the direct-coupling mode is performed. In the example shown in FIG. 5, this control causes the cylinder 26 to rotate from the direct-coupling position by 90 degrees so that the cam grooves 27a, 28a move upward in FIG. 5. Thereafter, the engine 3 is stopped. Thus, in this case, the high mode is an example of the travel mode in which the "condition that does not allow the rotation of the engine to stop" is not satisfied in the embodiment.

When a negative determination is made in step S31, the travel mode is transitioned to the separation mode via the high mode (step S33). This separation mode is an example of the travel mode in which the "condition that does not allow the rotation of the engine to stop" is not satisfied in the embodiment. In the example shown in FIG. 5, the cylinder 26 is rotated from the direct-coupling position by 180 degrees so that the cam grooves 27a, 28a move upward in FIG. 5. Therefore, in the clutches CL1, CL2, the first clutch CL1 is first disengaged and then the second clutch CL2 is disengaged. Thereafter, the engine 3 is stopped. Here, the wording "by way of the high mode" includes a situation in which the control command signal is output so that the engagement or disengagement of the clutches CL1, CL2 corresponds to the engagement or disengagement when the high mode is set, but the separation mode is set before the torque transmission state in the power split device 6 has completely become a transmission state in the high mode. Thus, in the control example shown in FIG. 8, the control performed in step S32 or step S33 is an example of the mode setting control in the embodiment.

By performing the control as described above, the engine 3 is separated from the driving wheels 18, so that it is possible to continue traveling of the hybrid vehicle 1 and to suppress, in advance, a situation where the rotational speed of either the pinion gears 7P or the pinion gears 8P becomes excessively high, and the like. In addition, the travel mode is transitioned by way of the high mode. Therefore, even if the high mode is temporarily established as a transitional state and the rotational speed of either the pinion gears 7P or the pinion gears 8P increases, it is possible to suppress the rotational speed compared to the case where the low mode is set. In addition, considering that the increase in the rotational speed is temporary, it is also possible to suppress deterioration in durability due to the high rotational speed.

Examples of inconvenience caused by stopping the engine 3 while the hybrid vehicle 1 is traveling with the engine 3 and the driving wheels 18 connected so that torque can be transmitted include a situation where the rotating member of the power split device 6 etc. stops, a situation where the hybrid vehicle 1 cannot travel, and a situation where the vibration increases, as well as a situation where the rotational speeds of the rotating members such as the pinion gears 7P, 8P and the first motor 4 increase. For example, when the hybrid vehicle 1 is traveling with the travel mode set to the low mode or the high mode, an inclination angle of the line indicating the operation state in each of the travel modes becomes large, as shown in the collinear diagrams in FIGS. 4A to 4D. Thus, the rotational speed of either the pinion gears 7P or the pinion gears 8P and the rotational speed of the first motor 4, etc. increase. A maximum value of each of the rotational speeds that increases as described above increases as the rotational speed of the output element (that is, the ring gear 8R of the second planetary gear mechanism 8) corresponding to the vehicle speed increases.

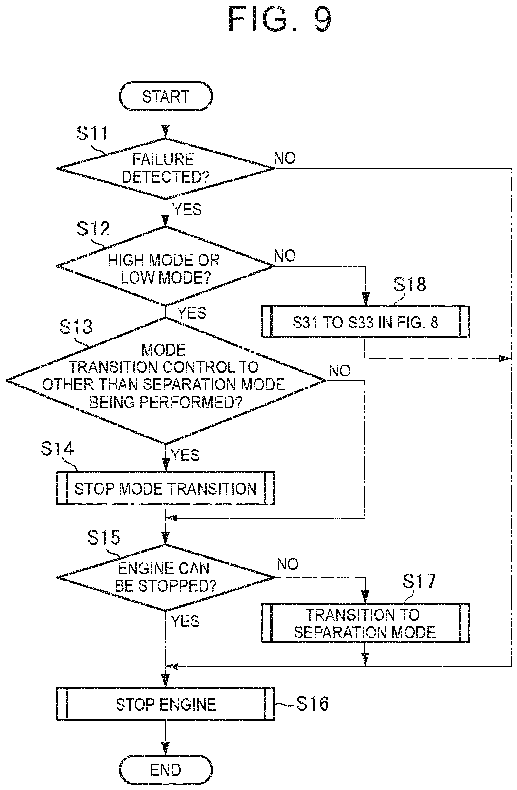

Thus, on the assumption that the engine 3 is stopped when the hybrid vehicle 1 is traveling with the travel mode set to the low mode or the high mode, occurrence of an unallowable situation, such as a situation where the rotational speeds of the pinion gears 7P, 8P etc. exceed a predetermined rotational speed, means that the condition that does not allow the rotation of the engine 3 to stop is satisfied. In the embodiment of the invention, the control for switching the travel mode is performed even in such a case. An example of the control is shown in a flowchart of FIG. 9.

In the control example shown in FIG. 9, it is first determined whether a failure has been detected (step S11). The control in step S11 may be the same as in step S1 shown in FIG. 7. When a negative determination is made in step S11, the routine shown in FIG. 9 is terminated without performing any particular control. In contrast, when a positive determination is made in step S11, it is determined whether the travel mode set at that time is the low mode or the high mode (step S12). When a positive determination is made in step S12 based on the fact that the travel mode is set to the low mode or the high mode, it is determined whether the transition control to the travel mode other than the separation mode is being performed (step S13). In the embodiment described here, the modes to which the travel mode can be transitioned from the low mode or the high mode are the separation mode and the direct-coupling mode. Therefore, in step S13, it is determined whether the transition control to the direct-coupling mode is being performed. This "transition control is being performed" determined in step S13 is an example of the "predetermined condition that does not allow the rotation of the engine to stop" in the embodiment.

When a positive determination is made in step S13, the mode transition is stopped (step S14). As described above, in the direct-coupling mode, the vehicle speed decreases with the decrease in the rotational speed of the engine 3, which may result in resonance in the powertrain or stop of the hybrid vehicle 1. Thus, in order to avoid such a situation, the transition to the direct-coupling mode is not performed. Accordingly, when a positive determination is made in step S13, the travel mode becomes the low mode or the high mode, so that a state in which the engine 3 and the driving wheels 18 are connected so that torque can be transmitted is maintained. Thus, at a high vehicle speed, the rotational speeds of the rotating members such as the pinion gears 7P, 8P may excessively increase with the stop of the rotation of the engine 3, whereas at a low vehicle speed, resonance in the powertrain may occur with the stop of the rotation of the engine 3.

It is determined whether such a situation to be avoided occurs, that is, whether the engine 3 can be stopped (step S15). The determination in step S15 can be made by, for example, determining whether the vehicle speed falls within a predetermined threshold range, or calculating the rotational speed of the predetermined rotating member based on the vehicle speed at that time and the gear ratio according to the travel mode at that time and determining whether the calculated rotational speed falls within a predetermined threshold range (within an allowable rotational speed).

When a positive determination is made in step S15 based on the fact that the rotational speed of any of the rotating members is not excessively high or resonance in the powertrain does not occur even if the engine 3 is stopped, the engine 3 is stopped (step S16). Thereafter, the routine shown in FIG. 9 is terminated. The control in step S16 may be the same as the control in step S4 shown in FIG. 7. When the engine 3 is stopped, the hybrid vehicle 1 is switched to the EV travel mode and travels using the second motor 5 as a drive force source or using the first motor 4 and the second motor 5 as drive force sources. The operation states are indicated by the broken lines in the collinear diagrams in FIGS. 4A to 4D.

In contrast, when a negative determination is made in step S15, the transition control to the separation mode is performed (step S17). The control performed in step S17 is an example of the mode setting control in the embodiment. The operation states in the separation mode are indicated by the broken lines in FIGS. 4A to 4D. When the engine 3 is stopped, the rotation of the first planetary gear mechanism 7 can be stopped, or the rotational speeds of the rotating members of the power split device 6 can be controlled by the first motor 4. Thus, even when the engine 3 is stopped, it is possible not only to continue traveling but also to suppress an excessively high-speed rotation of any of the rotating members or resonance in the powertrain.

When a negative determination is made in step S13, the travel mode is being transitioned to the separation mode. Therefore, the transition control is continued and the process proceeds to step S15 to determine whether the engine 3 can be stopped. While the travel mode is being switched, the rotational speed of any of the rotating members may excessively increase or resonance may occur due to decrease in the engine rotational speed. Therefore, in step S15, it may be determined whether such a situation occurs. Thus, when the transition control to the separation mode is proceeding and a positive determination is made in step S15, the process proceeds to step S16 and the engine 3 is stopped. In contrast, when a negative determination is made in step S15 based on the fact that the transition to the separation mode is not proceeding, the process proceeds to step S17 to continue the transition control to the separation mode, and then proceeds to step S16 to stop the engine 3.

Further, when a negative determination is made in step S12 described above, the process proceeds to step S18 and the same control as in steps S31 to S33 shown in FIG. 8 is performed. Then, the process proceeds to step S16 and the control to stop the engine 3 is performed. This is for suppressing inconvenience associated with the decrease in the rotational speed of the engine 3 with the engine 3 and the driving wheels 18 connected so that torque can be transmitted, that is, for suppressing an excessive increase in the rotational speed of any of the rotating members or resonance.

In the control example shown in FIG. 9, the condition determined in step S15 is an example of the "condition that does not allow the rotation of the engine to stop" in the embodiment. When a negative determination is made in step S15, it is considered that the condition is satisfied. When a positive determination is made in step S15, it is considered that the condition is not satisfied.

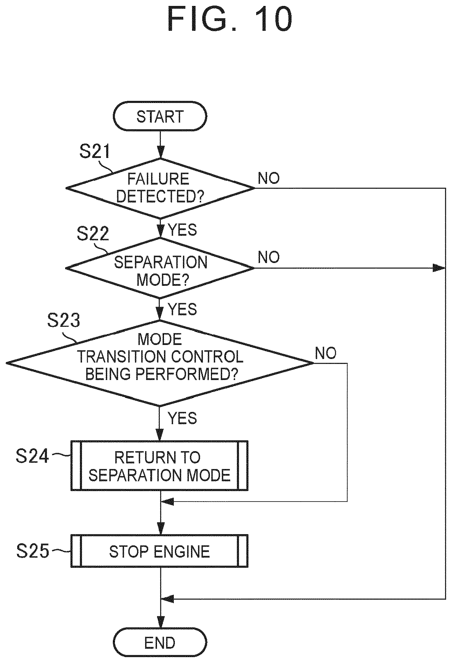

In the hybrid vehicle 1 in the embodiment described here, the separation mode can be set besides the direct-coupling mode and the low and high modes described above. Therefore, an abnormality that stops the engine 3 may occur in the separation mode or an abnormality that stops the engine 3 may occur while the travel mode is being switched from the separation mode to another travel mode may occur. FIG. 10 shows an example of control performed in such a case.

In the control example shown in FIG. 10, as in the control examples shown in FIG. 7 to 9, it is first determined whether a failure has been detected while the hybrid vehicle 1 is traveling with the engine 3 being driven (step S21). If no failure is detected and a negative determination is made in step S21, the routine in FIG. 10 is terminated without performing any particular control. In contrast, when a positive determination is made in step S21, it is determined whether the separation mode is set (step S22). When a negative determination is made in step S22, the routine in FIG. 10 is terminated without performing any particular control. In that case, the controls shown in FIG. 7 to 9 may be performed.

When the separation mode is detected and a positive determination is made in step S22, it is determined whether the mode transition control is being performed (step S23). As described above, in the hybrid vehicle 1 described here, the mode transition control is sequential control, and the mode transition control from the separation mode is either the switching control to the low mode or the switching control to the high mode. This means control of switching the travel mode to the mode in which the engine 3 and the driving wheels 18 are connected so that torque can be transmitted. When a positive determination is made in step S23, a situation may occur in which the rotational speed of the predetermined rotating member excessively increases or the vehicle speed decreases with the decrease in the rotational speed of the engine 3. Therefore, step S23 is an example of a step of determining whether the condition that does not allow the rotation of the engine 3 to stop is satisfied in the embodiment. When a positive determination is made in step S23, control for returning the travel mode to the separation mode is performed in order to avoid such an inconvenient situation (step S24). The control performed in step S24 is an example of the mode setting control in the embodiment. Thereafter, the engine 3 is stopped (step S25), and the routine shown in FIG. 10 is ended. When a negative determination is made in step S23 based on the fact that the separation mode is maintained, the process immediately proceeds to step S25 to stop the engine 3, and then the routine shown in FIG. 10 is ended.

Therefore, in the control example shown in FIG. 10, when an abnormality that causes the engine 3 to stop is detected while the hybrid vehicle 1 is traveling with the engine 3 being driven and the travel mode set to the separation mode, control for setting or maintaining the separation mode is started before the engine 3 is stopped. Thus, at the time when the engine 3 is stopped, the travel mode is set to the separation mode, and the torque transmission between the engine 3 and the driving wheels 18 is interrupted. Therefore, it is possible to suppress, in advance, an excessive increase in the rotational speed of any of the rotating members or occurrence of resonance due to the decrease in the rotational speed. Furthermore, the traveling of the hybrid vehicle 1 can be maintained.

Note that the invention is not limited to the embodiment described above. The transmission mechanism that can switch the travel mode among the plurality of modes is not limited to the power split device shown in FIG. 1, and may be, for example, the transmission mechanism with the configuration described in JP 2017 -7437 A. Also, the modes to which the travel mode can be set are not limited to the four modes described above, and the travel mode can be set to a mode other than the four modes. Further, in the invention, the abnormality that causes the engine to stop is a mechanical or electrical abnormality such as a mechanical abnormality in the engine itself, an abnormality in a control system that controls the engine, an abnormality that energy regeneration using the motor (motor-generator) cannot be performed as intended, an abnormality, in the electronic control device, that energy regeneration using the motor-generator cannot be performed as intended due to the amount of electricity stored in the battery larger than designed, and an abnormality in the battery itself. In short, the abnormality means a state in which it is not preferable to continue the operation of the engine. In addition, the shift unit in the embodiment is not limited to a shift unit that performs a sequential mode transition with a mechanical configuration, and may be configured to perform a sequential mode transition in terms of control. Further, the embodiment provides an advantage that the vehicle can continue traveling when the engine is stopped due to some abnormalities. However, needless to say, to continue traveling is not an essential requirement, and the traveling of the vehicle may be prohibited when the engine is stopped due to some abnormalities.

## Claims

1. A control device for a hybrid vehicle (1), the hybrid vehicle (1) including an engine (3), a driving wheel (18), a transmission mechanism (6) configured to selectively set a plurality of travel modes with different relationships between a rotational speed of the engine (3) and a rotational speed of the driving wheel (18), and a motor (4) connected to the transmission mechanism (6) and configured to control the rotational speed of the engine (3) via the transmission mechanism (6), the control device comprising:
a controller (20) configured to control the transmission mechanism (6),
the controller (20) being configured to detect an abnormality that causes a rotation of the engine (3) to stop while the hybrid vehicle (1) is traveling with the engine (3) being driven;
the controller (20) being configured to determine whether a predetermined condition that does not allow the rotation of the engine (3) to stop is satisfied when the abnormality is detected;
the controller (20) being configured to start, when determining that the predetermined condition is satisfied, mode setting control for setting the travel mode that is set by the transmission mechanism (6) to a travel mode in which the predetermined condition is not satisfied; and
the controller (20) being configured to stop the rotation of the engine (3) after the mode setting control is started;
wherein the transmission mechanism (6) includes a power split device that performs differential operation with a plurality of rotating elements including a first rotating element (7C) to which the engine (3) is connected, a second rotating element (7S) to which the motor (4) is connected, and a third rotating element (8R) to which the driving wheel (18) is connected; wherein:
the transmission mechanism (6) includes a first engagement mechanism (CL1) that is engaged to set a rotational speed ratio between the first rotating element (7C) and the third rotating element (8R) with rotation of the second rotating element (7S) stopped, to a predetermined first gear ratio, and a second engagement mechanism (CL2) that is engaged to set the rotational speed ratio between the first rotating element (7C) and the third rotating element (8R) with the rotation of the second rotating element (7S) stopped, to a predetermined second gear ratio; and
the travel modes include a direct-coupling mode, a first shift mode, a second shift mode, and a separation mode, the direct-coupling mode being a mode in which the first engagement mechanism (CL1) and the second engagement mechanism (CL2) are engaged and the rotational speed ratio between the first rotating element (7C) and the third rotating element (8R) is 1, the first shift mode being a mode in which only the first engagement mechanism (CL1) is engaged and the rotational speed ratio is set to the first gear ratio, the second shift mode being a mode in which only the second engagement mechanism (CL2) is engaged and the rotational speed ratio is set to the second gear ratio, and the separation mode being a mode in which both the first engagement mechanism (CL1) and the second engagement mechanism (CL2) are disengaged not to allow the engine (3) to transmit torque to the third rotating element (8R).

2. The control device for a hybrid vehicle (1) according to claim 1, wherein:
the transmission mechanism (6) includes a plurality of rotating members including the first rotating element (7C), the second rotating element (7S), and the third rotating element (8R);
the predetermined condition that does not allow the rotation of the engine (3) to stop is that a rotational speed of at least one rotating member, out of the rotating members, exceeds a predetermined allowable rotational speed when the engine (3) stops; and
the travel mode in which the predetermined condition is not satisfied is a travel mode in which even when the engine (3) stops, the rotational speed of none of the rotating members exceeds the predetermined allowable rotational speed.

3. The control device for a hybrid vehicle (1) according to claim 1 or 2, wherein the predetermined condition that does not allow the rotation of the engine (3) to stop is that the direct-coupling mode is set.

4. The control device for a hybrid vehicle (1) according to any one of claims 1 to 3, wherein the travel mode in which the predetermined condition is not satisfied is the separation mode.

5. The control device for a hybrid vehicle (1) according to claim 1 or 2, wherein:
the transmission mechanism (6) includes a shift unit that switches the travel mode;
the shift unit includes a direct-coupling position for setting the direct-coupling mode, a first shift position for setting the first shift mode, a second shift position for setting the second shift mode, and a separation position for setting the separation mode, and the shift unit is configured such that the first shift position and the second shift position are interposed between the direct-coupling position and the separation position, and the travel mode is switched between the direct-coupling position and the separation position by way of either the first shift position or the second shift position;
the controller (20) is configured to control, when the travel mode is switched from the direct-coupling mode to the separation mode in response to detection of the abnormality, switching of the shift unit such that the travel mode is switched by way of a shift position, out of the first shift position and the second shift position, in which the predetermined condition is not satisfied.

6. The control device for a hybrid vehicle (1) according to any one of claims 1, 2 and 5, wherein:
the predetermined condition that does not allow the rotation of the engine (3) to stop represents a state in which switching from a travel mode, out of the travel modes, other than the direct-coupling mode to another travel mode is being performed; and
the travel mode in which the predetermined condition is not satisfied is a travel mode, out of the travel modes, other than the direct-coupling mode.

7. The control device for a hybrid vehicle (1) according to claim 3 or 4, wherein:
the transmission mechanism (6) includes a shift unit that switches the travel mode;
the shift unit includes a direct-coupling position for setting the direct-coupling mode, a first shift position for setting the first shift mode, a second shift position for setting the second shift mode, and a separation position for setting the separation mode, and the shift unit is configured such that the first shift position and the second shift position are interposed between the direct-coupling position and the separation position, and the travel mode is switched between the direct-coupling position and the separation position by way of either the first shift position or the second shift position; and
the controller (20) is configured to control, when the travel mode is switched from the direct-coupling mode to the separation mode in response to detection of the abnormality, switching of the shift unit such that the travel mode is switched by way of a shift position, out of the first shift position and the second shift position, in which the predetermined condition is not satisfied.

8. A method for controlling a hybrid vehicle (1), the hybrid vehicle (1) including an engine (3), a driving wheel (18), a transmission mechanism (6) configured to selectively set a plurality of travel modes with different relationships between a rotational speed of the engine (3) and a rotational speed of the driving wheel (18), a motor (4) connected to the transmission mechanism (6) and configured to control the rotational speed of the engine (3) via the transmission mechanism (6), and a controller (20) configured to control the transmission mechanism (6), the method comprising:
detecting, by the controller (20), an abnormality that causes rotation of the engine (3) to stop while the hybrid vehicle (1) is traveling with the engine (3) being driven;
determining, by the controller (20), that a predetermined condition that does not allow rotation of the engine (3) to stop is satisfied, when the controller detects the abnormality;
starting, by the controller (20), mode setting control for setting a travel mode that is set by the transmission mechanism (6) to a travel mode in which the predetermined condition is not satisfied, when it is determined that the predetermined condition is satisfied; and
stopping, by the controller (20), the rotation of the engine (3) after the mode setting control is started;
wherein the transmission mechanism (6) includes a power split device that performs differential operation with a plurality of rotating elements including a first rotating element (7C) to which the engine (3) is connected, a second rotating element (7S) to which the motor (4) is connected, and a third rotating element (8R) to which the driving wheel (18) is connected; wherein the method further includes:
engaging a first engagement mechanism (CL1) of the transmission mechanism (6) to set a rotational speed ratio between the first rotating element (7C) and the third rotating element (8R) with rotation of the second rotating element (7S) stopped, to a predetermined first gear ratio,
engaging a second engagement mechanism (CL2) the transmission mechanism (6) to set the rotational speed ratio between the first rotating element (7C) and the third rotating element (8R) with the rotation of the second rotating element (7S) stopped, to a predetermined second gear ratio;
wherein the travel modes include a direct-coupling mode, a first shift mode, a second shift mode, and a separation mode, the direct-coupling mode being a mode in which the first engagement mechanism (CL1) and the second engagement mechanism (CL2) are engaged and the rotational speed ratio between the first rotating element (7C) and the third rotating element (8R) is 1, the first shift mode being a mode in which only the first engagement mechanism (CL1) is engaged and the rotational speed ratio is set to the first gear ratio, the second shift mode being a mode in which only the second engagement mechanism (CL2) is engaged and the rotational speed ratio is set to the second gear ratio, and the separation mode being a mode in which both the first engagement mechanism (CL1) and the second engagement mechanism (CL2) are disengaged not to allow the engine (3) to transmit torque to the third rotating element (8R).

## Patentansprüche

1. Steuervorrichtung für ein Hybridfahrzeug (1), wobei das Hybridfahrzeug (1) Folgendes umfasst: einen Motor (3), ein Antriebsrad (18), einen Getriebemechanismus (6), der dafür konfiguriert ist, selektiv mehrere Fahrmodi mit unterschiedlichen Beziehungen zwischen einer Drehzahl des Motors (3) und einer Drehzahl des Antriebsrads (18) einzustellen, und einen Motor (4), der mit dem Getriebemechanismus (6) verbunden ist und dafür konfiguriert ist, die Drehzahl des Motors (3) über den Getriebemechanismus (6) zu steuern, wobei die Steuervorrichtung Folgendes umfasst:
eine Steuerung (20), die dafür konfiguriert ist, den Getriebemechanismus (6) zu steuern,
wobei die Steuerung (20) dafür konfiguriert ist, eine Anomalie zu erfassen, die bewirkt, dass eine Drehung des Motors (3) stoppt, während das Hybridfahrzeug (1) mit angetriebenem Motor (3) fährt;
wobei die Steuerung (20) dafür konfiguriert ist, zu bestimmen, ob eine vorbestimmte Bedingung, die ein Stoppen der Drehung des Motors (3) nicht zulässt, erfüllt ist, wenn die Abnormalität erfasst wird;
wobei die Steuerung (20) dafür konfiguriert ist, wenn bestimmt wird, dass die vorbestimmte Bedingung erfüllt ist, eine Moduseinstellsteuerung zum Einstellen des Fahrmodus zu starten, der durch den Getriebemechanismus (6) auf einen Fahrmodus eingestellt wird, in dem die vorbestimmte Bedingung nicht erfüllt ist; und
wobei die Steuerung (20) dafür konfiguriert ist, die Drehung des Motors (3) zu stoppen, nachdem die Moduseinstellsteuerung gestartet wurde;
wobei der Getriebemechanismus (6) eine Leistungsverzweigungsvorrichtung umfasst, die einen Differentialbetrieb mit einer Vielzahl von rotierenden Elementen durchführt, die Folgendes umfassen: ein erstes Drehelement (7C), mit dem der Motor (3) verbunden ist, ein zweites Drehelement (7S), mit dem der Motor (4) verbunden ist, und ein drittes Drehelement (8R), mit dem das Antriebsrad (18) verbunden ist;
wobei:
der Getriebemechanismus (6) Folgendes umfasst: einen ersten Eingriffsmechanismus (CL1), der eingerückt wird, um ein Drehzahlverhältnis zwischen dem ersten Drehelement (7C) und dem dritten Drehelement (8R) bei gestoppter Drehung des zweiten Drehelements (7S) auf ein vorbestimmtes erstes Übersetzungsverhältnis einzustellen, und einen zweiten Eingriffsmechanismus (CL2), der eingerückt wird, um das Drehzahlverhältnis zwischen dem ersten Drehelement (7C) und dem dritten Drehelement (8R) bei gestoppter Drehung des zweiten Drehelements (7S) auf ein vorbestimmtes zweites Übersetzungsverhältnis einzustellen, und
die Fahrmodi Folgendes umfassen: einen Direktkopplungsmodus, einen ersten Schaltmodus, einen zweiten Schaltmodus und einen Trennmodus, wobei der Direktkopplungsmodus ein Modus ist, in dem der erste Eingriffsmechanismus (CL1) und der zweite Eingriffsmechanismus (CL2) eingerückt sind und das Drehzahlverhältnis zwischen dem ersten Drehelement (7C) und dem dritten Drehelement (8R) 1 ist, wobei der erste Schaltmodus ein Modus ist, in dem nur der erste Eingriffsmechanismus (CL1) eingerückt ist und das Drehzahlverhältnis auf das erste Übersetzungsverhältnis eingestellt ist, wobei der zweite Schaltmodus ein Modus ist, in dem nur der zweite Eingriffsmechanismus (CL2) eingerückt ist und das Drehzahlverhältnis auf das zweite Übersetzungsverhältnis eingestellt ist, und der Trennmodus ein Modus ist, in dem sowohl der erste Eingriffsmechanismus (CL1) als auch der zweite Eingriffsmechanismus (CL2) ausgerückt sind, um es dem Motor (3) nicht zu ermöglichen, Drehmoment auf das dritte Drehelement (8R) zu übertragen.

2. Steuervorrichtung für ein Hybridfahrzeug (1) nach Anspruch 1, wobei:
der Getriebemechanismus (6) eine Vielzahl von Drehelementen umfasst, die das erste Drehelement (7C), das zweite Drehelement (7S) und das dritte Drehelement (8R) umfassen;
die vorbestimmte Bedingung, die ein Anhalten der Drehung des Motors (3) nicht zulässt, darin besteht, dass eine Drehzahl von mindestens einem Drehelement von den Drehelementen eine vorbestimmte zulässige Drehzahl überschreitet, wenn der Motor (3) stoppt; und
der Fahrmodus, in dem die vorbestimmte Bedingung nicht erfüllt ist, ein Fahrmodus ist, in dem selbst wenn der Motor (3) stoppt, die Drehzahl von keinem der Drehelemente die vorbestimmte zulässige Drehzahl überschreitet.

3. Steuervorrichtung für ein Hybridfahrzeug (1) nach Anspruch 1 oder 2, wobei die vorbestimmte Bedingung, die ein Stoppen der Drehung des Motors (3) nicht zulässt, darin besteht, dass der Direktkopplungsmodus eingestellt ist.

4. Steuervorrichtung für ein Hybridfahrzeug (1) nach einem der Ansprüche 1 bis 3, wobei der Fahrmodus, in dem die vorbestimmte Bedingung nicht erfüllt ist, der Trennmodus ist.

5. Steuervorrichtung für ein Hybridfahrzeug (1) nach Anspruch 1 oder 2, wobei:
der Getriebemechanismus (6) eine Schalteinheit umfasst, die den Fahrmodus umschaltet;
die Schalteinheit Folgendes umfasst: eine Direktkopplungsposition zum Einstellen des Direktkopplungsmodus, eine erste Schaltposition zum Einstellen des ersten Schaltmodus, eine zweite Schaltposition zum Einstellen des zweiten Schaltmodus, und eine Trennposition zum Einstellen des Trennmodus und wobei die Schalteinheit so konfiguriert ist, dass die erste Schaltposition und die zweite Schaltposition zwischen der Direktkupplungsposition und der Trennposition eingefügt sind, und der Fahrmodus zwischen der Direktkopplungsposition und der Trennposition entweder über die erste Schaltposition oder die zweite Schaltposition umgeschaltet wird;
die Steuerung (20) so konfiguriert ist, dass sie steuert, wenn der Fahrmodus von dem Direktkopplungsmodus in den Trennmodus als Reaktion auf die Erkennung der Anomalie umgeschaltet wird, wobei die Schalteinheit so umgeschaltet wird, dass der Fahrmodus über eine Schaltstellung aus der ersten Schaltstellung und der zweiten Schaltstellung, in der die vorgegebene Bedingung nicht erfüllt ist, umgeschaltet wird.

6. Steuervorrichtung für ein Hybridfahrzeug (1) nach einem der Ansprüche 1, 2 und 5, wobei:
die vorbestimmte Bedingung, die nicht erlaubt, dass die Drehung des Motors (3) stoppt, einen Zustand darstellt, in dem ein Umschalten von einem Fahrmodus aus den Fahrmodi, die nicht der Direktkopplungsmodus sind, zu einem anderen Fahrmodus durchgeführt wird; und
der Fahrmodus, in dem die vorbestimmte Bedingung nicht erfüllt ist, ein anderer Fahrmodus ist als der Direktkopplungsmodus.

7. Steuervorrichtung für ein Hybridfahrzeug (1) nach Anspruch 3 oder 4, wobei:
der Getriebemechanismus (6) eine Schalteinheit umfasst, die den Fahrmodus umschaltet;
die Schalteinheit Folgendes umfasst: eine Direktkopplungsposition zum Einstellen des Direktkopplungsmodus, eine erste Schaltposition zum Einstellen des ersten Schaltmodus, eine zweite Schaltposition zum Einstellen des zweiten Schaltmodus, und eine Trennposition zum Einstellen des Trennmodus und wobei die Schalteinheit so konfiguriert ist, dass die erste Schaltposition und die zweite Schaltposition zwischen der Direktkupplungsposition und der Trennposition eingefügt sind, und der Fahrmodus zwischen der Direktkopplungsposition und der Trennposition entweder über die erste Schaltposition oder die zweite Schaltposition umgeschaltet wird; und
die Steuerung (20) so konfiguriert ist, dass sie steuert, wenn der Fahrmodus von dem Direktkopplungsmodus in den Trennmodus als Reaktion auf die Erkennung der Anomalie umgeschaltet wird, wobei die Schalteinheit so umgeschaltet wird, dass der Fahrmodus über eine Schaltstellung aus der ersten Schaltstellung und der zweiten Schaltstellung, in der die vorgegebene Bedingung nicht erfüllt ist, umgeschaltet wird.

8. Verfahren zum Steuern eines Hybridfahrzeugs (1), wobei das Hybridfahrzeug (1) Folgendes umfasst: einen Motor (3), ein Antriebsrad (18), einen Getriebemechanismus (6), der dafür konfiguriert ist, selektiv mehrere Fahrmodi mit unterschiedlichen Beziehungen zwischen einer Drehzahl des Motors (3) und einer Drehzahl des Antriebsrads (18) einzustellen, einen Motor (4), der mit dem Getriebemechanismus (6) verbunden ist und dafür konfiguriert ist, die Drehzahl des Motors (3) über den Getriebemechanismus (6) zu steuern, und eine Steuerung (20), die dafür konfiguriert ist, den Getriebemechanismus (6) zu steuern, wobei das Verfahren Folgendes umfasst:
Erfassen, durch die Steuerung (20), einer Anomalie, die bewirkt, dass eine Drehung des Motors (3) stoppt, während das Hybridfahrzeug (1) mit angetriebenem Motor (3) fährt;
Bestimmen, durch die Steuerung (20), dass eine vorbestimmte Bedingung, die ein Anhalten der Drehung des Motors (3) nicht zulässt, erfüllt ist, wenn die Steuerung die Abnormalität erfasst;
Starten, durch die Steuerung (20), der Moduseinstellsteuerung zum Einstellen eines Fahrmodus, der durch den Getriebemechanismus (6) auf einen Fahrmodus eingestellt wird, in dem die vorbestimmte Bedingung nicht erfüllt ist, wenn bestimmt wird, dass die vorbestimmte Bedingung erfüllt ist; und
Stoppen der Drehung des Motors (3) durch die Steuerung (20), nachdem die Moduseinstellsteuerung gestartet wurde;
wobei der Getriebemechanismus (6) eine Leistungsverzweigungsvorrichtung umfasst, die einen Differentialbetrieb mit einer Vielzahl von rotierenden Elementen durchführt, die Folgendes umfassen: ein erstes Drehelement (7C), mit dem der Motor (3) verbunden ist, ein zweites Drehelement (7S), mit dem der Motor (4) verbunden ist, und ein drittes Drehelement (8R), mit dem das Antriebsrad (18) verbunden ist;
wobei das Verfahren ferner Folgendes umfasst:
Einrücken eines ersten Eingriffsmechanismus (CL1) des Getriebemechanismus (6), um ein Drehzahlverhältnis zwischen dem ersten Drehelement (7C) und dem dritten Drehelement (8R) bei gestoppter Drehung des zweiten Drehelements (7S) auf ein vorbestimmtes erstes Übersetzungsverhältnis einzustellen,
Einrücken eines zweiten Eingriffsmechanismus (CL2) des Getriebemechanismus (6), um das Drehzahlverhältnis zwischen dem ersten Drehelement (7C) und dem dritten Drehelement (8R) bei gestoppter Drehung des zweiten Drehelements (7S) auf ein vorbestimmtes zweites Übersetzungsverhältnis einzustellen;
wobei die Fahrmodi Folgendes umfassen: einen Direktkopplungsmodus, einen ersten Schaltmodus, einen zweiten Schaltmodus und einen Trennmodus, wobei der Direktkopplungsmodus ein Modus ist, in dem der erste Eingriffsmechanismus (CL1) und der zweite Eingriffsmechanismus (CL2) eingerückt sind und das Drehzahlverhältnis zwischen dem ersten Drehelement (7C) und dem dritten Drehelement (8R) 1 ist, wobei der erste Schaltmodus ein Modus ist, in dem nur der erste Eingriffsmechanismus (CL1) eingerückt ist und das Drehzahlverhältnis auf das erste Übersetzungsverhältnis eingestellt ist, wobei der zweite Schaltmodus ein Modus ist, in dem nur der zweite Eingriffsmechanismus (CL2) eingerückt ist und das Drehzahlverhältnis auf das zweite Übersetzungsverhältnis eingestellt ist, und der Trennmodus ein Modus ist, in dem sowohl der erste Eingriffsmechanismus (CL1) als auch der zweite Eingriffsmechanismus (CL2) ausgerückt sind, um es dem Motor (3) nicht zu ermöglichen, Drehmoment auf das dritte Drehelement (8R) zu übertragen.

## Revendications

1. Dispositif de commande pour un véhicule hybride (1), le véhicule hybride (1) incluant un moteur thermique (3), une roue motrice (18), un mécanisme de transmission (6) configuré pour sélectivement régler une pluralité de modes de déplacement avec différentes relations entre une vitesse de rotation du moteur thermique (3) et une vitesse de rotation de la roue motrice (18), et un moteur électrique (4) relié au mécanisme de transmission (6) et configuré pour commander la vitesse de rotation du moteur thermique (3) par l'intermédiaire du mécanisme de transmission (6), le dispositif de commande comprenant :
une unité de commande (20) configurée pour commander le mécanisme de transmission (6),
l'unité de commande (20) étant configurée pour détecter une anormalité qui fait en sorte que la rotation du moteur thermique (3) s'arrête alors que le véhicule hybride (1) est en déplacement avec le moteur thermique (3) en train d'être actionné ;
l'unité de commande (20) étant configurée pour déterminer si une condition prédéterminée, qui ne permet pas à la rotation du moteur thermique (3) de s'arrêter, est respectée lorsque l'anomalie est détectée ;
l'unité de commande (20) étant configurée pour commencer, lors de la détermination que la condition prédéterminée est respectée, une commande de réglage de mode pour régler le mode de déplacement, qui est réglé par le mécanisme de transmission (6), à un mode de déplacement dans lequel la condition prédéterminée n'est pas respectée ; et
l'unité de commande (20) étant configurée pour arrêter la rotation du moteur thermique (3) après que la commande de réglage de mode est commencée ;
dans lequel le mécanisme de transmission (6) inclut un dispositif de division de puissance qui réalise une opération différentielle avec une pluralité d'éléments rotatifs incluant un premier élément rotatif (7C) auquel le moteur thermique (3) est relié, un deuxième élément rotatif (7S) auquel le moteur électrique (4) est relié, et un troisième élément rotatif (8R) auquel la roue motrice (18) est reliée ;
dans lequel :
le mécanisme de transmission (6) inclut un premier mécanisme d'enclenchement (CL1) qui est enclenché pour régler un rapport de vitesse de rotation entre le premier élément rotatif (7C) et le troisième élément rotatif (8R), avec la rotation du deuxième élément rotatif (7S) arrêtée, à un premier rapport de démultiplication prédéterminé, et un second mécanisme d'enclenchement (CL2) qui est enclenché pour régler le rapport de vitesse de rotation entre le premier élément rotatif (7C) et le troisième élément rotatif (8R), avec la rotation du deuxième élément rotatif (7S) arrêtée, à un second rapport de démultiplication prédéterminé ; et
les modes de déplacement incluent un mode de couplage direct, un premier mode de changement, un second mode de changement, et un mode de séparation, le mode de couplage direct étant un mode dans lequel le premier mécanisme d'enclenchement (CL1) et le second mécanisme d'enclenchement (CL2) sont enclenchés et le rapport de vitesse de rotation entre le premier élément rotatif (7C) et le troisième élément rotatif (8R) est 1, le premier mode de changement étant un mode dans lequel seulement le premier mécanisme d'enclenchement (CL1) est enclenché et le rapport de vitesse de rotation est réglé au premier rapport de démultiplication, le second mode de changement étant un mode dans lequel seulement le second mécanisme d'enclenchement (CL2) est enclenché et le rapport de vitesse de rotation est réglé au second rapport de démultiplication, et le mode de séparation étant un mode dans lequel le premier mécanisme d'enclenchement (CL1) et le second mécanisme d'enclenchement (CL2) sont tous le deux désenclenchés pour ne pas permettre au moteur thermique (3) de transmettre un couple au troisième élément rotatif (8R).

2. Dispositif de commande pour un véhicule hybride (1) selon la revendication 1, dans lequel :
le mécanisme de transmission (6) inclut une pluralité d'organes rotatifs incluant le premier élément rotatif (7C), le deuxième élément rotatif (7S), et le troisième élément rotatif (8R) ;
la condition prédéterminée qui ne permet pas à la rotation du moteur thermique (3) de s'arrêter est qu'une vitesse de rotation d'au moins un organe rotatif, parmi les organes rotatifs, dépasse une vitesse de rotation admissible prédéterminée lorsque le moteur thermique (3) s'arrête ; et
le mode de déplacement dans lequel la condition prédéterminée n'est pas respectée est un mode de déplacement dans lequel, même lorsque le moteur thermique (3) s'arrête, la vitesse de rotation d'aucun des organes rotatifs ne dépasse la vitesse de rotation admissible prédéterminée.

3. Dispositif de commande pour un véhicule hybride (1) selon la revendication 1 ou 2, dans lequel la condition prédéterminée qui ne permet pas à la rotation du moteur thermique (3) de s'arrêter est que le mode de couplage direct est réglé.

4. Dispositif de commande pour un véhicule hybride (1) selon l'une quelconque des revendications 1 à 3, dans lequel le mode de déplacement dans lequel la condition prédéterminée n'est pas respectée est le mode de séparation.

5. Dispositif de commande pour un véhicule hybride (1) selon la revendication 1 ou 2, dans lequel :
le mécanisme de transmission (6) inclut une unité de changement qui commute le mode de déplacement ;
l'unité de changement inclut une position de couplage direct pour régler le mode de couplage direct, une première position de changement pour régler le premier mode de changement, une seconde position de changement pour régler le second mode de changement, et une position de séparation pour régler le mode de séparation, et l'unité de changement est configurée de telle sorte que la première position de changement et la seconde position de changement soient interposées entre la position de couplage direct et la position de séparation, et le mode de déplacement est commuté entre la position de couplage direct et la position de séparation, par le biais de la première position de changement ou de la seconde position de changement ;
l'unité de commande (20) est configurée pour commander, lorsque le mode de déplacement est commuté du mode de couplage direct au mode de séparation en réponse à la détection de l'anomalie, la commutation de l'unité de changement de telle sorte que le mode de déplacement soit commuté, par le biais d'une position de changement, parmi la première position de changement et la seconde position de changement, dans laquelle la condition prédéterminée n'est pas respectée.

6. Dispositif de commande pour un véhicule hybride (1) selon l'une quelconque des revendications 1, 2 et 5, dans lequel :
la condition prédéterminée qui ne permet pas à la rotation du moteur thermique (3) de s'arrêter représente un état où la commutation d'un mode de déplacement, parmi les modes de déplacement, autre que le mode de couplage direct, à un autre mode de déplacement est réalisée ; et
le mode de déplacement dans lequel la condition prédéterminée n'est pas respectée est un mode de déplacement, parmi les modes de déplacement, autre que le mode de couplage direct.

7. Dispositif de commande pour un véhicule hybride (1) selon la revendication 3 ou 4, dans lequel :
le mécanisme de transmission (6) inclut une unité de changement qui commute le mode de déplacement ;
l'unité de changement inclut une position de couplage direct pour régler le mode de couplage direct,
une première position de changement pour régler le premier mode de changement, une seconde position de changement pour régler le second mode de changement, et une position de séparation pour régler le mode de séparation, et l'unité de changement est configurée de telle sorte que la première position de changement et la seconde position de changement soient interposées entre la position de couplage direct et la position de séparation, et le mode de déplacement est commuté entre la position de couplage direct et la position de séparation, par le biais de la première position de changement ou de la seconde position de changement ; et
l'unité de commande (20) est configurée pour commander, lorsque le mode de déplacement est commuté du mode de couplage direct au mode de séparation, en réponse à la détection de l'anomalie, la commutation de l'unité de changement de telle sorte que le mode de déplacement soit commuté, par le biais d'une position de changement, parmi la première position de changement et la seconde position de changement, dans laquelle la condition prédéterminée n'est pas respectée.

8. Procédé pour commander un véhicule hybride (1), le véhicule hybride (1) incluant un moteur thermique (3), une roue motrice (18), un mécanisme de transmission (6) configuré pour sélectivement régler une pluralité de modes de déplacement avec différentes relations entre une vitesse de rotation du moteur thermique (3) et une vitesse de rotation de la roue motrice (18), un moteur électrique (4) relié au mécanisme de transmission (6) et configuré pour commander la vitesse de rotation du moteur thermique (3) par l'intermédiaire du mécanisme de transmission (6), et une unité de commande (20) configurée pour commander le mécanisme de transmission (6), le procédé comprenant :
la détection, par l'unité de commande (20), d'une anormalité qui fait en sorte que la rotation du moteur thermique (3) s'arrête alors que le véhicule hybride (1) est en déplacement avec le moteur thermique (3) en train d'être actionné ;
la détermination, par l'unité de commande (20), qu'une condition prédéterminée, qui ne permet pas à rotation du moteur thermique (3) de s'arrêter, est respectée, lorsque l'unité de commande détecte l'anomalie ;
le commencement, par l'unité de commande (20), d'une commande de réglage de mode pour régler un mode de déplacement, qui est réglé par le mécanisme de transmission (6), à un mode de déplacement dans lequel la condition prédéterminée n'est pas respectée, lorsqu'il est déterminé que la condition prédéterminée est respectée ; et
l'arrêt, par l'unité de commande (20), de la rotation du moteur thermique (3) après que la commande de réglage de mode est commencée ;
dans lequel le mécanisme de transmission (6) inclut un dispositif de division de puissance qui réalise une opération différentielle avec une pluralité d'éléments rotatifs incluant un premier élément rotatif (7C) auquel le moteur thermique (3) est relié, un deuxième élément rotatif (7S) auquel le moteur électrique (4) est relié, et un troisième élément rotatif (8R) auquel la roue motrice (18) est reliée ;
dans lequel le procédé inclut en outre :
l'enclenchement d'un premier mécanisme d'enclenchement (CL1) du mécanisme de transmission (6) pour régler un rapport de vitesse de rotation entre le premier élément rotatif (7C) et le troisième élément rotatif (8R), avec la rotation du deuxième élément rotatif (7S) arrêtée, à un premier rapport de démultiplication prédéterminé,
l'enclenchement d'un second mécanisme d'enclenchement (CL2) du mécanisme de transmission (6) pour régler le rapport de vitesse de rotation entre le premier élément rotatif (7C) et le troisième élément rotatif (8R), avec la rotation du deuxième élément rotatif (7S) arrêtée, à un second rapport de démultiplication prédéterminé ;
dans lequel les modes de déplacement incluent un mode de couplage direct, un premier mode de changement, un second mode de changement, et un mode de séparation, le mode de couplage direct étant un mode dans lequel le premier mécanisme d'enclenchement (CL1) et le second mécanisme d'enclenchement (CL2) sont enclenchés et le rapport de vitesse de rotation entre le premier élément rotatif (7C) et le troisième élément rotatif (8R) est 1, le premier mode de changement étant un mode dans lequel seulement le premier mécanisme d'enclenchement (CL1) est enclenché et le rapport de vitesse de rotation est réglé au premier rapport de démultiplication, le second mode de changement étant un mode dans lequel seulement le second mécanisme d'enclenchement (CL2) est enclenché et le rapport de vitesse de rotation est réglé au second rapport de démultiplication, et le mode de séparation étant un mode dans lequel le premier mécanisme d'enclenchement (CL1) et le second mécanisme d'enclenchement (CL2) sont tous les deux désenclenchés pour ne pas permettre au moteur thermique (3) de transmettre un couple au troisième élément rotatif (8R).
